# EUROPEAN PATENT SPECIFICATION

(11) **EP 1 535 516 B1**
(45) Date of publication and mention of the grant of the patent: **13.09.2006**
(21) Application number: 03740512.3
(22) Date of filing: 11.07.2003
(51) Int. Cl.: A22B 5/04

(54) **THROAT-SLITTING DEVICE AND USES THEREOF**
HALSAUFSCHLITZVORRICHTUNG UND VERWENDUNGEN DAVON
INSTRUMENT D'EGORGEMENT ET UTILISATIONS

(30) Priority: 28.08.2002 ES 200201986
(43) Date of publication of application: 01.06.2005
(73) Proprietor: APC Europe S.A., 08400 Granollers (Barcelona) (ES)
(72) Inventor: CASANELLAS MILA, Josep, E-08029 Barcelona (ES); MORAL HERRERA, Rafael, Jesus, E-25300 Tárrega (ES); POLO POZO, Francisco, Javier, E-08210 Barberá Del Vallés (ES)
(74) Representative: Curell Aguilà, Marcelino
(86) International application number: PCT/ES2003/000356
(87) International publication number: WO 2004/019687

(56) References cited:
- EP-A- 0 843 969
- ES-A- 8 306 004
- GB-A- 809 342
- US-A- 2 422 194

## Description

### Field of the invention

This invention relates to a sticking trough suitable for bleeding an animal suspended vertically head-down, in which the trough comprises a blood collection recipient suitable for collecting the blood from the animal. Such a sticking trough is known from EP-A-843969. The animal is conveyed by a carry-forward device which defines a carry-forward direction. The invention likewise refers to preferential uses of a sticking trough according to the invention.

The invention applies to any animal intended for human consumption and slaughtered in abattoirs. It allows a hygienic collection of blood for subsequent use.

### State of the art

Industrially there are different blood collection systems in abattoirs, of which one can generally distinguish between "closed" and "open" systems.

The most widely known "closed" system, called "Hollow Knife" (or trocar and cannula) refers to obtaining blood by means of a hollow knife, an anticoagulation solution is added in the interior thereof to avoid coagulation of the blood collected, and it is connected with a tube which is usually made of plastics material to an initial collection tank. There are different versions of this system, the most sophisticated being those that include various sticking knives connected to a carrousel system with different intermediate holding tanks. Each of these tanks receives the blood from a limited number of animals, and are held until the official abattoir vet certifies that the blood therein does not come from animals that have failed the post-mortem veterinary inspection. Thereafter, the certified blood is automatically sent to a final storage tank, being refrigerated by a heat exchanger during its transit to the final storage tank.

The closed systems described above have the following drawbacks for abattoirs:
■ The bleeding of the animal cannot be monitored visually, as a result animals badly stuck by the slaughterman can continue to processing without having been completely bled. The blood remaining in the carcasses darkens the colour of the meat and it is consequently less appealing to the consumer.
■ The sticking knife must be kept in place on the animal throughout the time necessary to collect the animal's blood. This slows down the rate of the slaughter chain and the rate of the entire industrial slaughtering process subsequent to sticking.
■ The amount of blood collected per animal is less than in other systems, since the time during which the sticking knife remains in position is often reduced and as a result the blood which is collected at this time is limited. The animal continues to spill a great deal of blood after the hollow knife has been removed, constituting blood which cannot be collected for subsequent use and which is best regarded as a high risk substance for the abattoir.
■ The larger abattoirs slaughtering a great quantity of animals need more than one slaughterman for the bleeding of the stuck animals.
■ The installations are expensive, requiring in addition a very large amount of space in the abattoir.

The above factors mean that this system is not widely accepted in the abattoirs.

The "open" systems most common in Europe use sticking troughs whose dimensions vary according to the abattoir characteristics, country and location of the abattoir. These sticking troughs have very different designs. They are usually irrigated with an anticoagulation solution to prevent coagulation of the blood obtained from the animal. Compared with closed systems commented upon earlier they have the advantage of allowing rapid supervision of the bleeding of the animals, they do not slow down the speed of the slaughter chain since the sticking operation is rapid and they do not require a knife hold time as concerns the slaughterman, they allow larger abattoirs to employ only one person for this task and allow a greater quantity of blood to be obtained per animal as long as the dimensions and design of the sticking trough are adequate.

There is however a need to improve the quality of the blood collected, in particular with respect to questions of hygiene, in light of the need to comply with ever stricter hygiene norms for blood collection whether for human consumption (and/or pharmaceutical) or animal consumption (and/or veterinary).

### Summary of the invention

The present invention aims to provide a solution to these drawbacks. This objective is achieved by means of a sticking trough such as indicated at the beginning of this specification, characterised in that it comprises means of transport suitable for supporting the forefeet of the animal, said means of transport moving at the same speed as said carry-forward device.

In fact, it has been observed that one of the hygiene problems arising in presently available sticking trough systems is the contamination of the blood caused by the dirt of the feet, head and skin of the slaughtered animals, since in known systems both the head and feet hang above the sticking trough, the entire animal being hung in the upper vertical of the sticking trough. Known systems often cannot avoid collection of bodily fluids other than blood, such as urine and ejaculations, which can be produced by the electric charge used to stun the animals prior to sticking.

The means of transport prevent the forefeet of the animal from hanging in the sticking trough. Furthermore, by moving at the same speed as the carry-forward device, the means of transport accompany the animal and avoid the animal spinning on itself, the head can therefore be positioned in the manner most appropriate to avoid collection in the sticking trough of the blood (or other fluids) that run down the skin of the head. In this respect it is advantageous that the sticking trough have a separation element suitable for separating the animal's head from the blood collection recipient. This separation element preferably comprises a railing parallel to the blood collection recipient. In this manner one guarantees that the head of the animal hangs down outside the sticking trough and better prevents the fall of undesirable fluids in the sticking trough. The railing is separated by between 1 cm and 5 cm, preferably between 2 and 4 cm, from the blood collection recipient.

Since the means of transport accompany the animal at the same speed as the carry-forward device, one avoids the tendency of the animal to spin on itself, especially if the head bears against the railing (in general, the separation element) referred to previously, and which exerts a certain frictional force. Preferably the means of transport have compartments each of which is suitable for receiving one of the animal's feet. In this manner one ensures that the means of transport are capable of preventing the animal from spinning on itself, since the compartments provide a resistance greater than the frictional force generated by the railing.

Preferably the compartments have a length, measured in the carry-forward direction, of between 5 and 15 cm, and more preferably of between 8 and 12 cm. Compartments of these dimensions can receive the forefeet of the animals usually slaughtered, typically porcine, bovine, ovine and/or equine livestock. Likewise, in the same respect it is advantageous for the means of transport to have a width of between 8 cm and 20 cm.

A preferable embodiment of the invention is obtained when the means of transport comprise a conveyor belt. In fact, the conveyor belt may be a part of the sticking trough which can be substantially independent from the other abattoir installations. The conveyor belt can be operated by an electric motor, and can include a series of vertical partitions in its upper face, which configure the previously mentioned compartments.

Advantageously the blood collection recipient (defining a length, measured in the carry-forward direction, a width, measured horizontally, and a vertical height) has a width of between 30 and 70 cm. In fact, it should be taken into account that in making a cut for bleeding the animal, the blood leaves the incision with a certain amount of force, depending both on the species of animal as on the individual characteristics of the animal in question (age, weight, etc) and on the type of incision made. The present invention particularly favours implementing narrow collection recipients, since this improves hygiene conditions. The position of the animal's head is always the same, since the position of the animal is established in a very specific manner by the means of transport which transport the forefeet. This position is even further determined should the trough comprise a separation element. It has been observed that a width of collection recipient of between 30 and 70 cm is adequate for the majority of animals slaughtered.

Advantageously the blood collection recipient has a base inclined by between 2% and 5% with respect to a horizontal surface. This inclination allows guaranteeing rapid blood collection for later transport of the blood to the corresponding tanks.

Another preferable embodiment of the invention is obtained by adding to the trough a protection element which extends along at least 50%, preferably at least 70%, of the length of said blood collection recipient and which is arranged between the means of transport and the blood collection recipient at a first stretch of said means of transport, this first stretch being that which supports the animals' feet during bleeding. In fact, the means of transport extend along the entire collection recipient and conceptually can be divided into several stretches: a first stretch in which almost the entire bleeding of the animal takes place, a second stretch in which the slaughterman is positioned and in which the animal is prepared for bleeding and, possibly, a third stretch for return of the means of transport (for example should such means be a conveyor belt, return of the conveyor belt). Over a first stretch of the means of transport, the animal is moved along the collection recipient by means of the carry-forward device and the means of transport. Bleeding takes place during this movement. Contiguous to the first stretch there is a second stretch, in which the slaughterman prepares the animal prior to bleeding: placing the feet on the means of transport, making the cut or incision, etc. In the second stretch it is necessary for the slaughterman to have enough free space to work, however in the first stretch a protection element can be added between the means of transport and the blood collection recipient, so that the blood collection recipient is better protected from fluids and the dirt falling from the feet transported by the means of transport. Preferably the protection element is removable, which aids in cleaning and maintenance operations.

To achieve greater versatility the sticking trough according to the invention is advantageously provided with height-adjustable support feet.

A further object of the invention is likewise the use of a sticking trough according to the invention for collection of blood suitable for a purpose from among a group of purposes comprising: human consumption, animal consumption, pharmaceutical product preparation, veterinary product preparation, medical purposes and biotechnological purposes; and preferably for human consumption.

A further objective of the invention is the use of a sticking trough according to the invention for sticking animals of the group comprising: porcine, bovine, ovine and equine livestock, and preferably for sticking porcine livestock.

### Brief description of the drawings

Other advantages and features of the invention will become apparent from the following non-limitative description of preferable embodiments of the invention, referring to the drawings attached, in which:

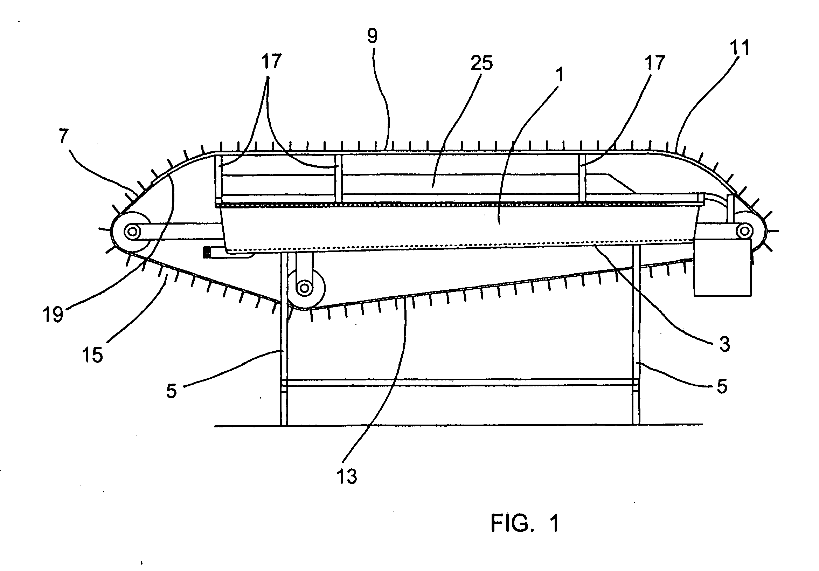

figure 1, is a front view of a sticking trough according to the invention;

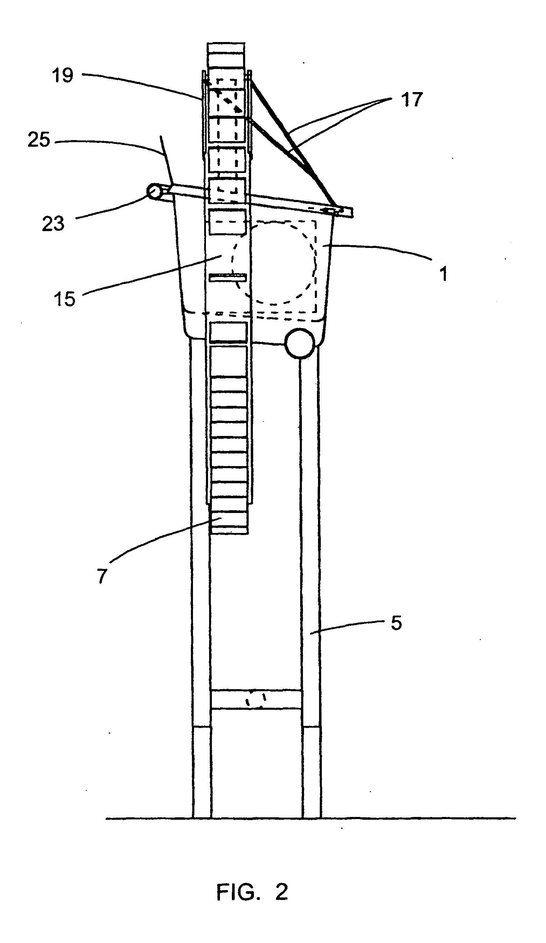

figure 2, is a side elevation view of the trough of figure 1;

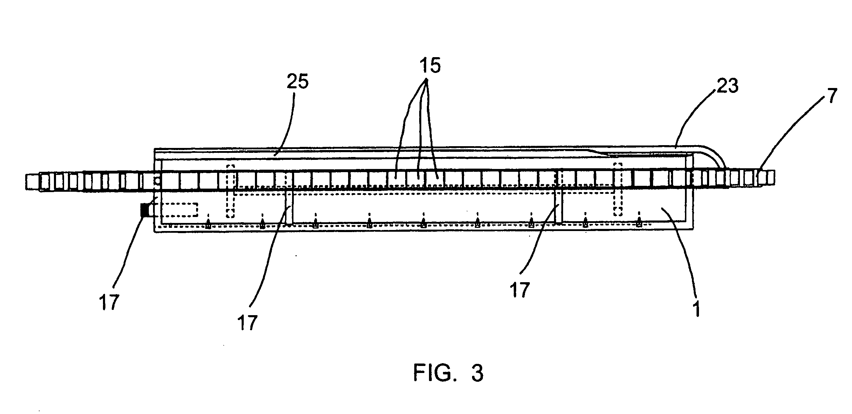

figure 3, is a plan view of the trough of figure 1; and

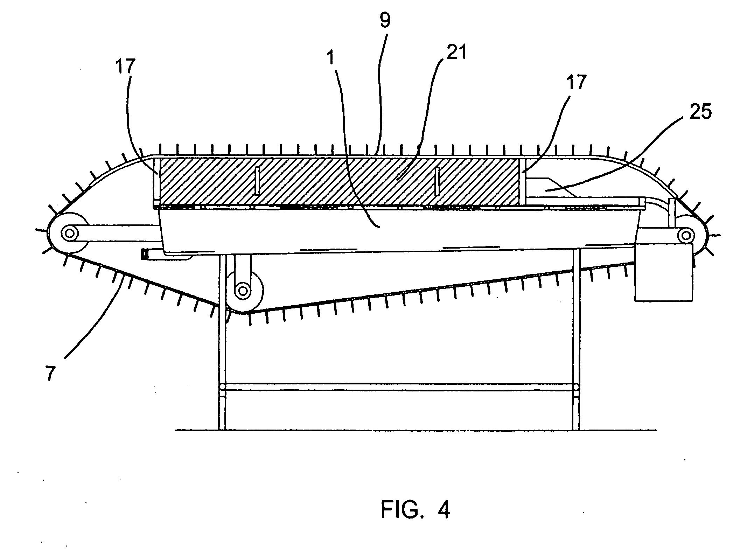

figure 4, is a front view of a sticking trough according to the invention with a protection element.

### Detailed description of some embodiments of the invention

The complete hygienic blood collection system for abattoirs comprises the following elements:
■ Sticking trough for the collection of blood, narrowly dimensioned, provided with a conveyor belt for positioning the feet of the animals.
■ Equipment for the preparation and dosage of an anticoagulant solution.
■ Initial tank with incorporated filter which receives the blood previously collected in the sticking trough, filters it and pumps it to intermediate holding tanks.
■ Assembly of holding tanks to hold the blood until sanitary approval.
■ Refrigerating equipment to refrigerate the blood to 4°C.
■ Final refrigerating tank for storage of the hygienic blood following post-mortem examination.

The sticking trough comprises a collection recipient 1 that is substantially an elongated parallelepiped open at the top, defining a length (which is the larger dimension and which is arranged parallel to the carry-forward direction of the animals moved by the abattoir carry-forward device), a width (measured horizontally) and a height (measured vertically). The collection recipient 1 is of food grade stainless steel or a material having similar characteristics.

The collection recipient 1 has blunt angles to avoid stagnation or accumulation of the blood collected. It is very important that the shape of the collection recipient 1 is such as to facilitate rapid drainage to the collection tank and prevent the accumulation of blood in the collection recipient 1.

The width of the collection recipient 1 must be the necessary minimum guaranteeing a clean and efficient collection of the first gush of blood when bleeding. Indicatively the width of the trough can be approximately 30 to 70 cm, and preferably between 50 and 70 cm.

The base 3 of the collection recipient 1 has an inclination, with respect to a horizontal surface, suitable to allow the blood to flow towards the end at which is found the drain to the initial blood collection tank. Preferably this inclination is of between 2 and 5%.

The length of the collection recipient 1 depends upon the slaughter chain rate in each abattoir and of the collection time scheduled for each animal. Indicatively times varying between 30 and 60 seconds collection can be established as correct times per each animal.

The sticking trough rests on stainless steel support feet 5. The height of the trough can be modified depending on the length of the animals to be slaughtered, the space available in the abattoir, the physical characteristics of the slaughterman, the location of the trough (above another trough ...) etc. For such purpose it is enough to modify the height of the trough support feet 5.

The trough likewise comprises means of transport suitable for supporting the animal's forefeet. These means of transport include a conveyor belt 7 arranged longitudinally and externally to the collection recipient 1, manufactured in food grade Teflon and polished. The conveyor belt 7 is driven by a motor determining said belt's rotation around the collection recipient 1, defining a forward path over said recipient (an indicative separation would be 30 cm above the upper edge of the collection recipient 1) and a return path below the collection recipient 1. In this manner three stretches can be defined with respect to the conveyor belt 7: a first stretch 9 along which the bleeding takes place, a second stretch 11 which coincides with the slaughterman's workstation, and a third stretch 13 which basically is the return path. The conveyor belt 7 is manufactured in Teflon parts of easy assemblage, and has compartments 15 also manufactured in Teflon, on which the animal's feet are placed preventing the introduction of said animal's feet in the interior of the collection recipient 1.

The width of the conveyor belt 7 is preferably between 8 and 10 cm, with a separation of between 5 and 15 cm (or preferably between 8 and 12 cm) between each compartment 15 for correctly placing the animal's feet.

The speed of the conveyor belt 7 must be identical to the carry-forward speed of the slaughter chain (or, in general, the carry-forward device) which transports the animal hung by its rear feet, to avoid the forefeet escaping from the compartments 15 or the animal rotating around a vertical axis.

The conveyor belt 7 is supported by supports 17 and a pan 19 having a width similar to that of the conveyor belt 7. The supports 17 and the pan 19 are made from food grade stainless steel and, as indicated above, are at a defined height of 30 cm approximately above the edge of the collection recipient 1. The animal's feet can thus be correctly separated from the collection recipient 1 and in turn the slaughterman is aided in rapid and clean sticking.

This manner of supporting the conveyor belt 7 allows the part of the collection recipient 1 furthest from the slaughterman's actions (which is to say, the first stretch 9) to be covered by a protection element 21. The protection element 21 is configured by stainless steel covers arranged between the supports 17 of the conveyor belt 7 and the upper edge of the collection recipient 1, further avoiding any possible contamination produced by the feet suspended and positioned on the conveyor belt 7.

The collection recipient 1 has externally and on its exterior side (or the side in contact with the animals) a separation element configured by a railing 23 parallel to the collection recipient 1, separated from the collection recipient 1 by a distance of some 3 cm, which separates the animal from the vertical of the collection recipient 1, preventing the introduction of the animal's head inside the collection recipient 1, in addition to preventing the blood draining from the animal's head being collected inside the collection recipient 1. Optionally a separating plate 25 can also be included on the upper exterior edge (the upper edge which is in contact with the animals) of the collection recipient 1.

The entire collection recipient 1 is irrigated with an anticoagulation solution added by means of diffusers arranged longitudinally along the whole of the collection recipient 1. The anticoagulation solution is propelled to the diffusers from a tank for preparation, conditioning and storage of the anticoagulation solution by means of a piston pump which actuates the correct dose of anticoagulant. This anticoagulant dose is mixed with air from a compressor, the air being previously filtered in sub-micron filters to ensure sterility. The mixing of the anticoagulation solution with the filtered air occurs prior to its dosing in the collection recipient 1. The objective is to spray the entire surface of the collection recipient 1 with the anticoagulation solution.

The blood received in the collection recipient 1 is rapidly sent to a narrowly dimensioned tank, where after being filtered it is pumped to a system of intermediate holding tanks, in which the blood is held until the veterinary inspection certifies the absence of non-complying animals whose blood has been collected in the same tank. Subsequently, the blood is pumped through a heat exchanger where it is refrigerated to 4°C and lastly is sent to a final tank in which the blood that has passed the veterinary inspection is stored until collection by a specialised company for its use as raw material in the manufacture of products with high value added.

The system of intermediate holding tanks comprises a number of tanks suited to the characteristics and dimensions of the abattoir, but will never be less than three intermediate tanks.

The advantages of a sticking trough such as described above compared with currently existing installations are the following:
■ Since the collection recipient 1 has smaller dimensions than the collection recipients for traditional troughs, the trough according to the invention can be installed in smaller abattoirs and can even be installed on other pre-existing abattoir sticking troughs. It needs less space for its installation.
■ Since the sticking trough support feet 5 can be adjusted to the required height, one achieves perfect adaptation to the abattoir's characteristics, the dimensions of the animals and the physical characteristics or preferences of the slaughterman, etc.
■ One avoids the vertical of the animal suspended from the slaughter chains hanging above the collection recipient 1 thus also avoiding collection of dirt, bodily fluids and water which fall from the animals' skin.
■ One avoids the animals' feet from hanging inside the collection recipient 1 by their being maintained on the conveyor belt 7.
■ One avoids the heads of the animals slaughtered from being possibly introduced inside the collection recipient 1.
■ One avoids the blood draining along the feet and head from being possibly collected inside the collection recipient 1.
■ The sticking trough can be easily adapted to different slaughter chain rates by simply increasing or decreasing the rotational speed of the conveyor belt 7 which transports the animals' feet.
■ More than half (and up to more than 70%) of the collection recipient 1 is closed by a protection element 21, which prevents the collection of dirt or other liquids such as urine or ejaculations which can be produced in the final phases of animal bleeding.
■ Lesser microbiological contamination of the blood with dirt from the skin, feet and head of the slaughtered animals.
■ The sticking trough does not delay or slow the abattoir slaughter rate. The system is easily adaptable to the sticking speed of the abattoir.
■ The point of incision for producing the bleeding of the animal is easily accessible to the slaughterman.
■ The slaughterman can readily verify the effectiveness of the incision made in the animal, and can make a new incision if he judges that correct bleeding has not been produced by the first incision.
■ The fact that the effectiveness of the sticking operation can be verified easily and rapidly by the slaughterman and that in this manner rapid action to correct the error can be taken, avoids blood remaining in the animals which subsequently, due to the temperatures reached in the skinner, occasions the coagulation of the blood inside the butchered animals, causing darkening of the meat from these animals and its refusal as being considered "blood-stained meat".
■ The sticking trough according to the invention can be easily adapted to any abattoir depending on requirements, therefore, contrary to some highly sophisticated "hollow knife" systems, the sticking trough according to the invention can be easily individualised for each abattoir.
■ No more than one slaughterman is required in the slaughter lines for abattoirs butchering at high working rates, since unlike the "hollow knife" systems the slaughterman or the collection system do not require a hold time before proceeding with sticking of subsequent animals. A single slaughterman can work with a sticking trough according to the invention in a highspeed slaughter line without needing an additional person to assist him.
■ The sticking trough according to the invention is designed so that the majority of animals' feet naturally come to rest in the compartments 15 of the conveyor belt 7.
■ The metallic covers of the protection element 21 which cover more than 70% of the collection recipient 1 at its end furthest from the slaughterman can be easily removed, allowing quick and efficient cleaning of the entire blood collection trough.
■ Automatic or manual disinfecting and chemical cleaning systems can easily be incorporated to the sticking trough.
■ A better control and regulation of the dosage of anticoagulant can be obtained since the collection recipient 1 has small dimensions, which also means a lesser total quantity of anticoagulation solution per blood collected.
■ The production of blood obtained with this system is approximately 3 litres per animal, with animals of 80 to 90 kg of body weight. With the traditional sticking trough system one could achieve 3.2 litres, whilst with the "hollow knife" system, rarely more than 2.5 litres were obtained.
■ The cost of the complete blood collection installation with all constitutive elements, can be considered as being 15 to 20% of the cost of a corresponding installation with a "hollow knife" system.

### Comparison between a sticking trough according to the invention and a traditional sticking trough :

In a study carried out as to the microbiological quality of the blood obtained in the new sticking trough installed in an industrial abattoir compared with the same abattoir when it operated with a traditional trough, the following results were observed:

| | Number of samples (n) | Total count (CFU/g) | Enterobacteraceae (CFU/g) | Sulphite-reducing clostridia (CFU/g) | Salmonella (25 g) |
|---|---|---|---|---|---|
| "New" trough | 18 | 4.5 x 10⁵ | 1.8 x 10⁴ | 1 | Nil |
| Traditional trough | 5 | 5.5 x 10⁶ | 3.4 x 10⁵ | 10 | Nil |

NB: The results given above correspond to the microbiological content of the blood samples taken from the truck tank on arrival at the processing plant after a period of approximately 24 hours storage in the refrigerated tank at the abattoir.

One should note that the blood obtained by means of the new sticking trough maintains at least 1 microbiological contamination logarithm less in any of the analyses carried out, from total count to enteric pathogens such as enterobacteria and sulphite-reducing clostridia.

In a more itemised study of the new animal blood hygienic collection system with the new trough, an examination was performed as to how bacterial contamination varied in blood recovered as from time of animal slaughter to obtaining of the spray dried plasma, verifying the evolution of the contamination in different intermediary points from the collection system to the industrial plant production system for processing of animal blood derivative products.

The results presented are the mean values obtained from 5 studies performed:

| Description | Total count (CFU/ml) | Enterobactera ceae (CFU/ml) | Salmonella/25g | % Solids plasma | % Protein plasma | % Ash plasma |
|---|---|---|---|---|---|---|
| Anticoagulation solution | 1.203 | 0 | 0 | | | |
| Blood obtained directly from the animal | 1.095 | 4 | 0 | | | |
| Exit new sticking trough (prior to initial tank for blood) | 46.390 | 1.434 | 0 | | | |
| Entry intermediate holding tanks | 28.333 | 272 | 0 | | | |
| Exit intermediate holding tanks | 28.650 | 17 | 0 | | | |
| Truck unloading in processing plant | 405.200 | 1.290 | 0 | 9,1 | | 1,4 |
| Liquid plasma exit from centrifuges | 200.000 | 10.300 | | 9,2 | 7,9 | 1,4 |
| Final powdered plasma | 333.333 | 0 | 0 | 92,9 | 75,3 | 13,9 |

It can be observed that the blood collected in the new sticking trough presents a microbiological standard comparable with that of the carcasses intended for human consumption.

If the physico-chemical and microbiological characteristics of the final product (powdered plasma) obtained with this new installation are compared with those obtained with a traditional sticking trough, the following differences are observed:

**Physico-chemical characteristics:**

| | Moisture | Proteins | Ash | Colour |
|---|---|---|---|---|
| | (%) | (%) | (%) | (Hunter-Lab scale) |
| | | | | (Delta A) |
| Powdered plasma with new sticking trough | 7.1 | 75.3 | 13.9 | 68.4 |
| Powdered plasma with traditional sticking trough | 6.7 | 75.4 | 14.4 | 65.5 |

It is important to underline the fact that the plasma obtained with the new system has a lesser ash content and a colour which is less reddish than that obtained with the traditional sticking trough

**Microbiological characteristics:**

| | Total count | Enterobacteraceae | Salmonella |
|---|---|---|---|
| | (CFU/g) | (CFU/g) | (25 g) |
| Powdered plasma with new sticking trough | 3.3 x 10⁵ | < 10 | Nil |
| Powdered plasma with traditional sticking trough | 7.3 x 10⁶ | 35 | Nil |

## Claims

1. Sticking trough suitable for bleeding an animal vertically suspended head down, said trough comprising a blood collection recipient (1) suitable for the collection of blood from said animal, said animal being transported by a carry-forward device which defines a carry-forward direction, **characterised in** comprising means of transport suitable for supporting the forefeet of said animal, said means of transport moving at the same speed as said carry-forward device.

2. Trough according to claim 1, **characterised in** having a separation element suitable for separating the head of said animal from said blood collection recipient (1).

3. Trough according to claim 2, **characterised in that** said separation element comprises a railing (23) parallel to said blood collection recipient (1), said railing (23) being separated by between 1 cm and 5 cm, preferably by between 2 cm and 4 cm, from said blood collection recipient (1).

4. Trough according to at least one of claims 1 to 3, **characterised in that** said means of transport have compartments (15) each suitable for receiving a foot of said animal.

5. Trough according to claim 4, **characterised in that** said compartments (15) have a length, measured in said carry-forward direction, of between 5 cm and 15 cm, preferably of between 8 cm and 12 cm.

6. Trough according to at least one of claims 1 to 5, **characterised in that** said means of transport have a width of between 8 cm and 20 cm.

7. Trough according to at least one of claims 1 to 6, **characterised in that** said means of transport comprise a conveyor belt (7).

8. Trough according to at least one of claims 1 to 7, **characterised in that** said blood collection recipient (1) defines a length, measured in said carry-forward direction, a width, measured horizontally, and a vertical height, in which said width is of between 30 and 70 cm.

9. Trough according to at least one of claims 1 to 8, **characterised in that** said blood collection recipient (1) has a base (3) which is inclined by between 2% and 5% with respect to a horizontal surface.

10. Trough according to at least one of claims 1 to 9, **characterised in** comprising a protection element (21) which extends along at least 50%, preferably at least 70%, of the length of said blood collection recipient (1) and which is arranged between said means of transport and said blood collection recipient (1) at a first stretch (9) of said means of transport, said first stretch (9) being that which supports said feet of said animals during said bleeding.

11. Trough according to claim 10, **characterised in that** said protection element (21) can be removed.

12. Trough according to at least one of claims 1 to 11, **characterised in** comprising height-adjustable support feet (5).

13. Use of a sticking trough according to at least one of claims 1 to 12 for collection of blood suitable for a purpose from the group comprising: human consumption, animal consumption, preparation of pharmaceutical products, preparation of veterinary products, medical purposes and biotechnological purposes; and preferably for human consumption.

14. Use of a sticking trough according to at least one of claims 1 to 12 for sticking of animals of the group comprising: porcine, bovine, ovine and equine livestock; and preferably for sticking of porcine livestock.

## Patentansprüche

1. Abstechwanne für das Ausbluten eines vertikal kopfüber aufgehängten Tieres, wobei die Wanne einen Blutsammelbehälter (1) aufweist, der zum Sammeln des Tierbluts geeignet ist, und wobei das Tier durch eine Vorwärts-Beförderungseinrichtung transportiert wird, die eine Vorwärts-Beförderungsrichtung festlegt, **gekennzeichnet durch** eine Transporteinrichtung, die dafür geeignet ist, die Vorderfüße des Tieres festzuhalten, wobei sich die Transporteinrichtung mit der gleichen Geschwindigkeit bewegt wie die Vorwärts-Beförderungseinrichtung.

2. Wanne nach Anspruch 1, **gekennzeichnet durch** ein Trennelement, das dafür geeignet ist, den Kopf des Tieres vom Blutsammelbehälter (1) fernzuhalten.

3. Wanne nach Anspruch 2, **dadurch gekennzeichnet, daß** das Trennelement eine Schiene (23) umfaßt, die parallel zum Blutsammelbehälter (1) verläuft und die vom Blutsammelbehälter (1) einen Abstand zwischen 1 cm und 5 cm, vorzugsweise zwischen 2 cm und 4 cm aufweist.

4. Wanne nach wenigstens einem der Ansprüche 1 bis 3, **dadurch gekennzeichnet, daß** die Transporteinrichtung Abteilungen (15) aufweist, die jeweils zur Aufnahme eines Tierfußes geeignet sind.

5. Wanne nach Anspruch 4, **dadurch gekennzeichnet, daß** die Abteilungen (15) jeweils eine Länge, gemessen in der Vorwärts-Bewegungsrichtung, zwischen 5 cm und 15 cm, vorzugsweise zwischen 8 cm und 12 cm aufweisen.

6. Wanne nach wenigstens einem der Ansprüche 1 bis 5, **dadurch gekennzeichnet, daß** die Transporteinrichtung eine Breite zwischen 8 cm und 20 cm aufweist.

7. Wanne nach wenigstens einem der Ansprüche 1 bis 6, **dadurch gekennzeichnet, daß** die Transporteinrichtung ein Transportband (7) umfaßt.

8. Wanne nach wenigstens einem der Ansprüche 1 bis 7, **dadurch gekennzeichnet, daß** der Blutsammelbehälter (1) eine Länge, gemessen in der Vorwärts-Bewegungsrichtung, eine Breite, horizontal gemessen, und eine vertikale Höhe aufweist, wobei die Breite zwischen 30 und 70 cm liegt.

9. Wanne nach wenigstens einem der Ansprüche 1 bis 8, **dadurch gekennzeichnet, daß** der Blutsammelbehälter (1) einen Boden (3) aufweist, der bezüglich einer horizontalen Fläche zwischen 2 % und 5 % geneigt ist.

10. Wanne nach wenigstens einem der Ansprüche 1 bis 9, **gekennzeichnet durch** ein Schutzelement (21), das sich entlang wenigstens 50 %, vorzugsweise wenigstens 70 %, der Länge der Blutsammelbehälters (1) erstreckt und das in einem ersten Abschnitt (9) der Transporteinrichtung zwischen der Transporteinrichtung und dem Blutsammelbehälter (1) angeordnet ist, wobei der erste Abschnitt (9) derjenige ist, in dem die Füße des Tieres während des Ausblutens festgehalten werden.

11. Wanne nach Anspruch 10, **dadurch gekennzeichnet, daß** das Schutzelement (21) entfernt werden kann.

12. Wanne nach wenigstens einem der Ansprüche 1 bis 11, **gekennzeichnet durch** höhenverstellbare Stützfüße (5).

13. Verwendung einer Abstechwanne nach wenigstens einem der Ansprüche 1 bis 12 zum Sammeln von Blut, das zur Verwendung für einen der folgenden Zwecke geeignet ist: Menschlicher Verzehr, Tiernahrung, Herstellung von pharmazeutischen Produkten, Herstellung von Veterinärprodukten; medizinische Zwecke und biotechnologische Zwecke; und vorzugsweise für den menschlichen Verzehr.

14. Verwendung einer Abstechwanne nach wenigstens einem der Ansprüche 1 bis 12 zum Abstechen von Tieren aus der Gruppe, die Schweine, Rinder, Schafe und Pferde umfaßt; vorzugsweise zum Abstechen von Schweinen.

## Revendications

1. Instrument d'égorgement adapté à la saignée d'un animal suspendu verticalement la tête en bas, ledit instrument comprenant un récipient de collecte de sang (1) adapté pour la collecte de sang provenant dudit animal, ledit animal étant transporté par un dispositif d'avancement qui définit une direction d'avancement, **caractérisé en ce qu'**il comprend des moyens de transport adaptés au support des pieds avant dudit animal, lesdits moyens de transport se déplaçant à la même vitesse que ledit dispositif d'avancement.

2. Instrument selon la revendication 1, **caractérisé en ce qu'**il présente un élément de séparation adapté pour séparer la tête dudit animal dudit récipient de collecte de sang (1).

3. Instrument selon la revendication 2, **caractérisé en ce que** ledit élément de séparation comprend une rampe (23) parallèle audit récipient de collecte de sang (1), ladite rampe (23) étant séparée par 1 à 5 cm, de préférence par 2 à 4 cm, dudit récipient de collecte de sang (1).

4. Instrument selon au moins l'une des revendications 1 à 3, **caractérisé en ce que** lesdits moyens de transport présentent des compartiments (15) étant chacun adapté pour recevoir un pied dudit animal.

5. Instrument selon la revendication 4, **caractérisé en ce que** lesdits compartiments (15) présentent une longueur, mesurée dans ladite direction d'avancement, comprise entre 5 et 15 cm, de préférence entre 8 et 12 cm.

6. Instrument selon au moins l'une des revendications 1 à 5, **caractérisé en ce que** lesdits moyens de transport présentent une largeur comprise entre 8 et 20 cm.

7. Instrument selon au moins l'une des revendications 1 à 6, **caractérisé en ce que** lesdits moyens de transport comprennent une bande transporteuse (7).

8. Instrument selon au moins l'une des revendications 1 à 7, **caractérisé en ce que** ledit récipient de collecte de sang (1) définit une longueur, mesurée dans ladite direction d'avancement, une largeur, mesurée horizontalement et une hauteur verticale, dans laquelle ladite largeur est comprise entre 30 et 70 cm.

9. Instrument selon au moins l'une des revendications 1 à 8, **caractérisé en ce que** ledit récipient de collecte de sang (1) présente un socle (3) qui est incliné entre 2 et 5 % par rapport à une surface horizontale.

10. Instrument selon au moins l'une des revendications 1 à 9, **caractérisé en ce qu'**il comprend un élément de protection (21) qui s'étend le long d'au moins 50 %, de préférence d'au moins 70 %, de la longueur dudit récipient de collecte de sang (1) et qui est disposé entre lesdits moyens de transport et ledit récipient de collecte de sang (1) au niveau d'une première section (9) desdits moyens de transport, ladite première section (9) étant celle qui supporte lesdits pieds desdits animaux pendant ladite saignée.

11. Instrument selon la revendication 10, **caractérisé en ce que** ledit élément de protection (21) peut être retiré.

12. Instrument selon au moins l'une des revendications 1 à 11, **caractérisé en ce qu'**il comprend des pieds de support réglables en hauteur (5).

13. Utilisation d'un instrument d'égorgement selon au moins l'une des revendications 1 à 12 pour la collecte de sang adapté à un objectif du groupe d'objectifs comprenant : la consommation humaine, la consommation animale, la préparation de produits pharmaceutiques, la préparation de produits vétérinaires, des objectifs médicaux et des objectifs biotechnologiques ; et de préférence pour la consommation humaine.

14. Utilisation d'un instrument d'égorgement selon au moins l'une des revendications 1 à 12, pour égorger des animaux du groupe comprenant : les porcins, les bovins, les ovins et les équins ; et de préférence pour égorger des porcins.
